# EUROPÄISCHE PATENTSCHRIFT

(11) **EP 3 533 364 B1**
(45) Veröffentlichungstag und Bekanntmachung des Hinweises auf die Patenterteilung: **25.11.2020**
(21) Anmeldenummer: 19156094.5
(22) Anmeldetag: 08.02.2019
(51) Int. Cl.: A47J 31/60

(54) **GETRÄNKEAUTOMAT MIT REINIGUNGSVORRICHTUNG**
BEVERAGE MACHINE WITH CLEANING DEVICE
DISTRIBUTEUR AUTOMATIQUE DE BOISSONS POURVU DE DISPOSITIF DE NETTOYAGE

(30) Priorität: 28.02.2018 DE 102018104573
(43) Veröffentlichungstag der Anmeldung: 04.09.2019
(73) Patentinhaber: Miele & Cie. KG, 33332 Gütersloh (DE); Eugster/Frismag AG, 8580 Amriswil (CH)
(72) Erfinder: Held, Benjamin, 32549 Bad Oeynhausen (DE); Sonderegger, Lukas, 9435 Heerb Heerbrugg (CH)

(56) Entgegenhaltungen:
- EP-A1- 3 192 411
- DE-A1-102014 113 161

## Beschreibung

Die Erfindung betrifft einen Getränkeautomaten zur Zubereitung von Aufgussgetränken, mit einem Strömungsleitungssystem mit einer Wasserzuführung, einer Ventilanordnung und einer Reinigungsvorrichtung zur Durchführung eines Reinigungs- und/oder Pflegevorgangs, umfassend eine Vorratskartusche zur Bevorratung von Reinigungsmittel, und eine elektrisch angetriebene Pumpe zur Zuführung des Wassers und Reinigungsmittel oder einer Reinigungslösung von der Reinigungsvorrichtung in das Strömungsleitungssystem, ferner umfassend eine Steuereinrichtung zur Aktivierung und Deaktivierung der Ventilanordnung und der Pumpe zur Durchführung der Getränkezubereitung und des Reinigungs- oder Pflegevorgangs,
wobei die Reinigungsvorrichtung (80) eine durch die Pumpe betriebene Sprühvorrichtung zum Ansprühen mit Wasser und partiellem Auflösen von in dem Vorratsbehälter vorhandenen, in fester oder pastöser Form angeordnetem Pflegemittel bzw. Reinigungsmittel aufweist, und
die Reinigungsvorrichtung ferner einen Mischbehälter umfasst, in den das durch Ansprühen aufgelöste Pflegemittel eintritt, wobei das Strömungsleitungssystem ferner eine mit der Steuereinrichtung in Verbindung stehende Ventilanordnung umfasst, die dazu ausgebildet ist, das als Reinigerlösung aufgelöste Pflegemittel in das Strömungsleitungssystem einzuleiten.

Ein Getränkeautomat mit einer Sprühvorrichtung zum partiellem Auflösen von Pflegemittel aus einem Vorratsbehälter ist aus der DE 10 2016 100 719 A1 bekannt. Hierbei wird die Sprühvorrichtung mit einem hohen Wasserdruck beaufschlagt, wenn ein gezielter Strahl in den Vorratsbehälter zum Auflösen der Pflegesubstanz erzeugt werden muss. Um das Leitungssystem bzw. den Düsenbereich zu spülen, wird die Sprühvorrichtung mit einem geringeren Wasserdruck beaufschlagt, damit das aus der Düse austretende Wasser nicht das im Vorratsbehälter befindliche Pflegemittel erreicht. In dieser Situation wird der Düsenbereich mit klarem Wasser gespült und klares Wasser gelangt in den Mischbehälter.

Hierbei kann es jedoch passieren, dass der mit niedrigeren Wasserdrucks erzeugte Sprühstrahl das Innere des Vorratsbehälters erreicht und versehentlich einen Teil Pflegemittel in die Mischkammer auslöst. Ferner muss der Durchfluss so klein eingestellt sein, dass eine Beaufschlagung des Reinigungssystems mit klarem Wasser sehr viel Zeit beansprucht.

Ein anderer Getränkeautomat mit einer Reinigungsvorrichtung ist beispielsweise aus der DE 10 2011 081 010 A1 bekannt. Hierbei ist in der Kartusche, die von der Geräteaußenseite her zugänglich ist, eine Pumpe integriert, die von einem geräteseitigen Antrieb angesteuert wird.

Hierbei handelt es sich um eine Dosierpumpe, mit der eine vorbestimmte Menge an Reinigungskonzentrat aus der Kartusche in das Strömungsleitungssystem eingelassen wird. Nachteilig hierbei ist der recht aufwändige Aufbau, ferner muss eine mechanische Kupplung für die Übertragung der Motorkraft des Geräteinternen Motors auf die in der Kartusche befindlichen Pumpe bereitgestellt werden.

Der Erfindung liegt somit die Aufgabe zu Grunde, auf einfache Weise eine verbesserte, automatisch arbeitende Reinigungsvorrichtung bereitzustellen.

Erfindungsgemäß wird unter anderem diese Aufgabe durch einen Getränkebereiter mit den Merkmalen des Patentanspruchs 1 und durch ein Verfahren gemäß Anspruch 10 gelöst. Vorteilhafte Ausgestaltungen und Weiterbildungen der Erfindung ergeben sich aus den jeweils abhängigen Ansprüchen.

Ein mit der Erfindung erreichbarer Vorteil besteht unter anderem darin, dass die Reinigungsvorrichtung eine eigenständige Wartung durchführt, ohne dass der Benutzer eingreifen muss. Ferner ist sichergestellt, dass Anbackungen / Anhaftungen oder Verstopfungen in Leitungen der Reinigungsvorrichtung selbst weitestgehend vermieden bzw. ganz verhindert werden. Dies wird auf einfache Weise dadurch erreicht, dass die Sprühvorrichtung eine Sprühdüse zur Bereitstellung eines etwa senkrecht nach oben gerichteten Sprühstrahls in den Vorratsbehälter hinein und zusätzlich zumindest einen weiteren Auslass zum Auslassen des Wassers in den Mischbehälter umfasst. Dadurch wird eine sehr große Fördermenge an Frischwasser in den Mischbehälter bereitgestellt, wenn kein Reinigungsmittel aus dem Vorratsbehälter herausgelöst werden soll. Dies ist in einem zeitlichen Abschnitt der Fall, in dem das Fluidsystem der Reinigungsvorrichtung gespült und somit von Reinigerresten befreit wird. Insgesamt wird durch das Beenden der Förderung von Reinigungsmittel oder Reinigungsfluid und dem danach aktivierten Durchspülen der Leitungen und des Mischbehälters mit klarem Wasser sichergestellt, dass Reste oder Spritzer von Reiniger sicher entfernt werden. Es ist somit sichergestellt, dass die mit Reiniger in Berührung kommenden Komponenten oder Leitungen nicht verstopfen, wenn nach dem Reinigungszyklus länger inaktiv sind und dabei austrocknen. Ein weiterer Vorteil der erfindungsgemäßen Reinigungsvorrichtung ist, dass eine durch die Pumpe betriebene Sprühvorrichtung zum Ansprühen und partiellem Auflösen von in dem Vorratsbehälter vorhandenem, in fester oder pastöser Form angeordnetem Pflegemittel verwendet wird. Das feste Mittel ist in der Regel länger haltbar, als flüssiges Mittel. Komplizierte Konservierungsmaßnahmen müssen hierbei nicht getroffen werden.

In einer bevorzugten Ausführung umfasst die Sprühvorrichtung ein Ventil mit zum Verschließen und zum Öffnen des weiteren Auslasses. Dadurch wird erreicht, dass der Wasserzulauf mit einer hohen Durchflussrate erfolgen kann, wodurch der gesamte Reinigungsablauf und die danach ablaufende Spülphase sich kurz gestaltet.

In einer zweckmäßigen Weiterbildung umfasst das Ventil einen im Strömungsweg oder Strömungskanal beweglich geführten Verschlusskörper, der anhand des durch die Strömung verursachten Staudruckes in die Verschlussposition bewegbar ausgebildet ist. Dadurch benötigt das Ventil der Sprühvorrichtung keine Aktoren zur Betätigung, wodurch sich ein sehr einfacher und zuverlässiger Aufbau ergibt.

Dabei ist es zweckmäßig, dass das Ventil eine Dichtung () umfasst, die mit dem Verschlusskörper () und dem weiteren Auslass zusammenwirkt, wenn dieser geschlossen ist. Dadurch wird erreicht, dass der gesamte Fluidstrom mit hohem Duck durch die Düse geführt wird, wodurch ein starker, gezielt nach oben gerichteter Strahl in den Vorratsbehälter hinein ergibt, mit dem eine schnelle und zuverlässige partielle Auflösung des pastösen Pflegemittels erreicht wird.

In einer insgesamt zweckmäßigen Ausführung ist die Steuereinrichtung ferner dazu eingerichtet und programmiert, die Pumpe mit verschiedenen Pumpenleistungen zu aktivieren, um verschiedene Strömungen im Strömungsweg des Ventils zu verursachen.

In einer bevorzugten Weiterbildung umfasst der Getränkebereiter eine Motorsteuerung zur Bereitstellung der Stromzuführung zur Pumpe, die mit der Steuereinrichtung hinsichtlich Informationen der zugeführten elektrischen Leistung für die Pumpe in Verbindung steht, wobei die Antriebssteuerung dazu eingerichtet ist, der aufgrund dieser Informationen der Pumpe die entsprechende elektrische Leistung zuzuführen. Damit kann auf sichere Art und Weise die Zuführung der elektrischen Leistung oder Stromes zum Motor variiert werden.

In einer bevorzugten Weiterbildung ist die Motorsteuerung dazu eingerichtet, der Pumpe bzw. dem Pumpenmotor Wechselstrom mit einstellbarem Phasenanschnitt zuzuführen oder einzustellen. Dies ist mit einfachen, elektronischen Schaltern, wie TRIACS oder Thyristoren aufzubauen. Ferner kann ein bereits vorhandener Einphasen-Synchronmotor verwendet werden, der durch das Vorschalten einer solchen Motorsteuerung hinsichtlich seiner elektrischen Leistung und daraus folgernd seiner Pumpenleistung mit unterschiedlichen oder verschiedenen Werten betrieben werden kann.

In einer anderen, bevorzugten Weiterbildung umfasst die Antriebssteuerung einen Frequenzumrichter, der dazu eingerichtet und ausgebildet ist, den der Pumpe zugeführten Strom hinsichtlich der Frequenz und der bereitgestellten Leistung derart einzustellen, dass sich verschiedene, vorgegebene Pumpenleistungen ergeben oder einstellen. Damit können sehr genau und filigran Drehzahl- und Lasteinstellungen vorgenommen werden. Ferner ist ein kurzzeitiger Überlastbetrieb möglich, sodass ein etwas unterdimensionierter, also kleinerer und kostengünstiger Pumpenmotor eingesetzt werden kann.

In einer weiteren, bevorzugten Ausführung ist die Antriebssteuerung dazu eingerichtet, der Pumpe bzw. dem Pumpenmotor einen puls-weiten-modulierten Strom zuzuführen, sodass sich verschiedene, vorgegebene Pumpenleistungen einstellen. Dies ist besonders sinnvoll, wenn die Stromversorgung des Geräts einen Gleichstrom bereits zur Verfügung stellt, sodass keine aufwändige, separate Stromversorgung für den Pumpenmotor mehr notwendig ist.

In einer insgesamt vorteilhaften Ausführung ist die Steuereinrichtung dazu eingerichtet, einen Reinigungsvorgang durchzuführen, bei dem die Antriebssteuerung derart gesteuert wird, dass sich eine Zuführung der elektrischen Leistung oder Stromes zur Pumpe gemäß einem vorgegebenen Profil hinsichtlich der Werte für die zugeführte elektrische Leistung oder den Strom einstellt. Somit können innerhalb der Reinigungsvorrichtung gezielt unterschiedliche Durchflussmengen in einem einzigen Reinigungszyklus bereitgestellt werden, wenn dies für die unterschiedlichen Schritte für die Durchführung des Reinigungszyklus sinnvoll ist.

Die Erfindung betrifft ferner ein Verfahren zum Betreiben eines Getränkeautomaten mit einem Strömungsleitungssystem und einer Reinigungsvorrichtung, wie vorstehend beschrieben, aufweisend die Schritte
- Füllen des Mischbehälters mit einer vorgegebenen Menge Wasser;
- Ansprühen des bevorrateten Reinigers;
- Überführen des Reinigerfluids in das Strömungsleitungssystem bzw. zumindest bereichsweise in das Strömungsleitungssystem:
- Reinigung oder Spülen der Düse.

Gemäß einer insgesamt bevorzugten Ausführung des Getränkebereiters, wie vorstehend beschrieben, ist die Steuereinrichtung ferner dazu eingerichtet, das Strömungsleitungssystem gemäß dem oben genannten Verfahren zu betreiben.

Insgesamt beziehen sich alle Richtungsangaben und Positionsangaben auf die betriebsgemäße Aufstellposition des Getränkeautomaten bzw. Getränkebereiters.

Ein Ausführungsbeispiel der Erfindung ist in den Zeichnungen rein schematisch dargestellt und wird nachfolgend näher beschrieben. Es zeigen
- Fig. 1:: einen Heißgetränkebereiter in einer perspektivischen Frontansicht
- Fig. 2:: schematisch das Strömungsleitungssystem;
- Fig. 3, 4:: die Reinigungsvorrichtung in verschiedenen Betriebszuständen;
- Fig. 5:: die Reinigungsvorrichtung in einer Detailansicht und
- Fig. 6:: ein Diagramm eines Reinigungszyklus in zeitlicher Abfolge.

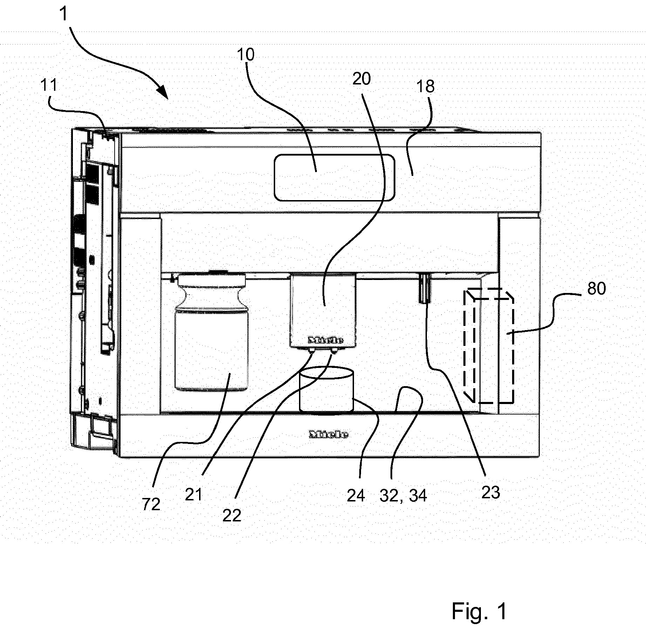

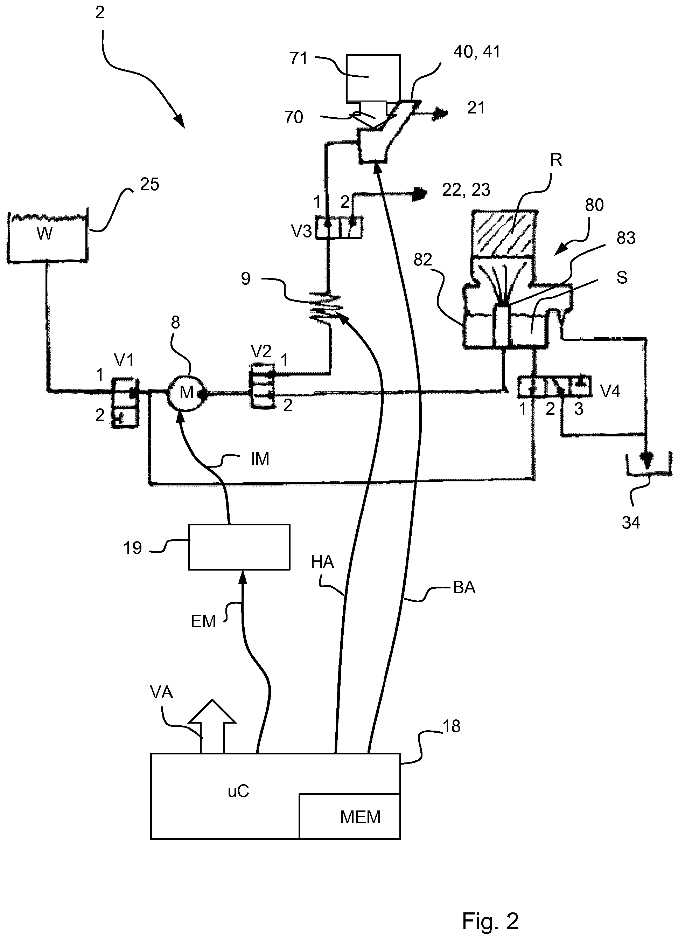

Die Fig.1 zeigt am Beispiel eines als Einbaugerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem der Vorratsbehälter 71 für Kaffeebohnen mit darunter angebrachtem Mahlwerk 70 mit Motor, den Wasserbehälter 25 sowie die Möglichkeit, der Unterbringung des Strömungsleitungssystems 2. Ferner ist am Gerät 1 ein Vorratsbehälter 72 für Milch angeschlossen bzw. mit dem Strömungsleitungssystem 2 fluidtechnisch gekoppelt. Im Frontbereich des Heißgetränkebereiter 1 verfügt dieser über einen höhenbeweglichen Auslass 20, in dem mehrere Entnahmeeinrichtungen, hier Auslassdüsen 21, 22, untergebracht sind. Bei der Entnahmeeinrichtung 23 handelt es sich im vorliegenden Fall um eine Dampfdüse zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse 21 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21, 22 in der Höhe verschiebbar angeordnet, so dass sie der Höhe eines auf der Abstellfläche oder Abtropfblech 32 abgestellten Trinkgefäßes 24 angepasst werden können, ohne dass bei der Abgabe des Getränkes ein Verspritzen erfolgt. Das Abtropfblech 32 ist vorzugsweise mit Öffnungen und/oder Schlitzen versehen, um Flüssigkeitsreste in einer unterhalb des Abtropfbleches 32 vorhandenen Auffangschale 34 abzuführen. Ferner umfasst der Heißgetränkebereiter 1 einen Tresterbehälter oder Abfallbehälter, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Funktionsbaugruppen, wie Pumpe 8, Ventile V1, V2, V3, V4 (Fig. 2), Heizeinrichtung 9 und Mahlwerk 70, soweit vorhanden, zu steuern, wie es für die Zubereitung des jeweils ausgewählten Getränkes notwendig ist. Die Steuereinrichtung 18 ist bevorzugt als Mikrocontroller uC mit einem zugeordneten Speicher MEM ausgeführt ist (Fig. 2), Der Heißgetränkebereiter 1 umfasst ferner eine Bedienvorrichtung 10, die in dem gezeigten Beispiel einen Berührbildschirm zur Eingabe von Bedienhandlungen umfasst. Die Bedienvorrichtung 10 wird von einem Mikrocontroller uC gesteuert, wobei in dem gezeigten Beispiel die Gerätesteuerung 18 bzw. der Mikrocontroller uC der Gerätesteuerung 18 auch für die Steuerung und Funktion der Bedienvorrichtung 10 ausgebildet und/oder programmiert ist. Die Vorratsbehälter 71, 25, 72 sind vorzugsweise jeweils mit einem Erfassungsmittel zur Erfassung der bevorrateten Menge der Zutat oder Zutaten versehen, die datentechnisch oder signaltechnisch mit der Steuereinrichtung 18 in Verbindung stehen.

Der Heißgetränkebereiter 1 umfasst ferner eine Reinigungsvorrichtung 80, in der Reinigungsmittel R bevorratet wird, welches gesteuert durch die Steuereinrichtung 18 in Zusammenwirken mit der Ventilanordnung in das Strömungsleitungssystem 2 zudosiert oder eingelassen wird. Insbesondere wird zyklisch oder aufgrund einer Benutzereingabe der Reiniger bzw. die Reinigerlösung S in die milchführenden Leitungen, die sich innerhalb des Gerätes 1 befinden, eingelassen.

Fig. 2 zeigt das Strömungsleitungssystem 2 mit den relevanten Funktionseinheiten und Aktoren zur Zubereitung von Heißgetränken. Im Zubereitungsbetrieb des Gerätes 1 wird Wasser W aus dem Vorratsbehälter 25 mittels der Pumpe 8 durch den Durchlauferhitzer 9 und mit Druck der Brühkammer 41 der Brüheinheit 40 zugeführt. In der Brühkammer befindet sich während der Aufbrühphase Kaffeemehl, durch das das erhitzte Wasser W mit Druck hindurchgedrückt wird. Dabei werden die löslichen Substanzen aus dem Kaffeemehl herausgelöst und als Getränk zur Entnahmeeinrichtung bzw. Düse 21 geführt und von dort aus in das Trinkgefäß 24 (Fig. 1) ausgegeben. Die Ventile sind dabei wie folgt geschaltet: V1 in Position 1, V2 in Position 1, V3 in Position 1 und V4 in Position 3 (gesperrt). Zum Bezug von Heißwasser oder zum Aktivieren des Milchaufschäumers (nicht gezeigt), wird das Ventil V3 in die Position 2 geschaltet, um Heißwasser oder Dampf dem Milchaufschäumer, beispielsweise ein Venturirohr, zuzuführen.

Die Pumpe 8 bzw. der Pumpenmotor M wird dabei mittels der Motorsteuerung 19 bestromt, wie es mit der Verbindungsleitung IM skizziert ist. Die Motorsteuerung 19 erhält die Eingangsinformationen EM zur Ansteuerung bzw. Bestromung des Motors M von der Gerätesteuerung 18.

Die Ansteuerung der Ventile V1, V2, V3, V4 erfolgt ebenfalls über die Informationsausgabe VA. Die Steuereinrichtung 18 steuert auch die Aktivierung des Heizkörpers 9 des Wassererhitzers, wie es mit der Signalleitung HA schematisch gezeigt ist. Die Steuereinrichtung 18 steuert auch die Aktivierung der Brüheinheit 40 bzw. die Verfahrbewegung der Brühkammer 41 an, wie es mit der Signalleitung BA schematisch gezeigt ist.

In Fig. 2 ist ferner gezeigt, dass das Strömungsleitungssystem 2 eine Reinigungsvorrichtung 80 umfasst bzw. diese im Strömungsleitungssystem 2 eingebunden ist. Gemäß der skizzierten Ausführung umfasst die Reinigungsvorrichtung 80 einen Vorratsbehälter 81 zur Bevorratung von Reinigungsmittel R in fester, gepresster Pulver- oder pastöser Form. Unterhalb des Vorratsbehälters 81 ist die Mischkammer 82 angeordnet, in die das abgelöste Reinigungsmittel R mit Wasser W vermischt und entsprechend zur Reinigerlösung S aufgelöst wird. Die Reinigerlösung S wird mittels einer Pumpe, in dem gezeigten Beispiel mit der für die Getränkezubereitung vorgesehenen Pumpe 8, in ausgesuchte Bereiche des Strömungsleitungssystems 2 gepumpt bzw. geführt. Die Einleitung erfolgt dabei unter Zuhilfenahme der entsprechenden Ansteuerung der Ventile V1, V2, V3, V4. Der Motor M der Pumpe 8 wird dabei mittels einer Motorsteuerung 19 bestromt, sodass die Pumpe 8 bzw. der Motor M in der Reinigungsphase mit unterschiedlichen Pumpenleistungen oder Durchflussgeschwindigkeiten betrieben wird.

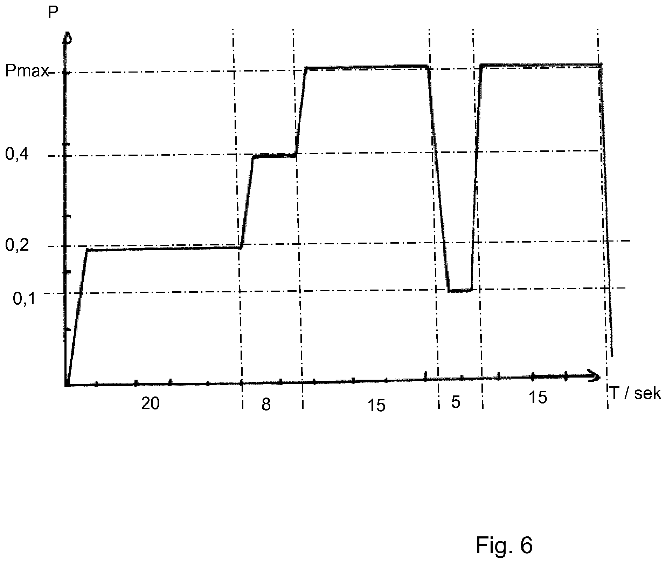

Der Reinigungsprozess oder die Reinigungsphase wird dabei in mehreren Schritten durchlaufen, die sich wie folgt beschreiben lassen. Die Pumpenleistung P wird in den unterschiedlichen Schritten ebenfalls variiert. Als maximale Pumpenleistung Pmax wird ein Wert im Bereich von 200 bis 600 ml / min eingestellt oder vorgesehen. Ein möglicher Ablauf in als Diagramm in Fig. 6 skizziert.
Schritt 1, Füllen des Mischbehälters 82:
   Ventilstellung V1: 1, V2: 2, V3: 1, V4: 3,
   Pumpenleistung P ca. 0,2 Pmax,
   Dauer (ca.): T = 20 Sek.
Schritt 2, Ansprühen Reiniger R:
   Ventilstellung V1: 2, V2: 2, V3: 1, V4: 1,
   Pumpenleistung P: ca., 0,4 Pmax
   Dauer (ca.): T= 8 Sek.
Schritt 3 Reinigerüberführung ins Fluidsystem 2
   Ventilstellung V1:2, V2: 1, V3: 1, V4: 1
   Pumpenleistung P: Pmax
   Dauer (ca.): T = 15 Sek.
Schritt 4 Düsenreinigung
   Ventilstellung V1:1 V2:2 V3:1 V4: 3 (oder 1)
   Pumpenleistung P: 0,1 Pmax
   Dauer (ca.): T=5 Sek.
Schritt 5 (optional) Restreinigerüberführung ins Fluidsystem 2
   Ventilstellung V1: 2, V2: 1, V3: 1, V4: 1
   Pumpenleistung P: Pmax
   Dauer (ca.): T=15 Sek.

Bei der Düsenreinigung (Schritt 4) kann das Ventil V4 auf 3 stehen oder auf 1. Wenn es auf 1 steht, folgt Schritt 5, ansonsten ist der gesamte Reinigungsprozess abgeschlossen.

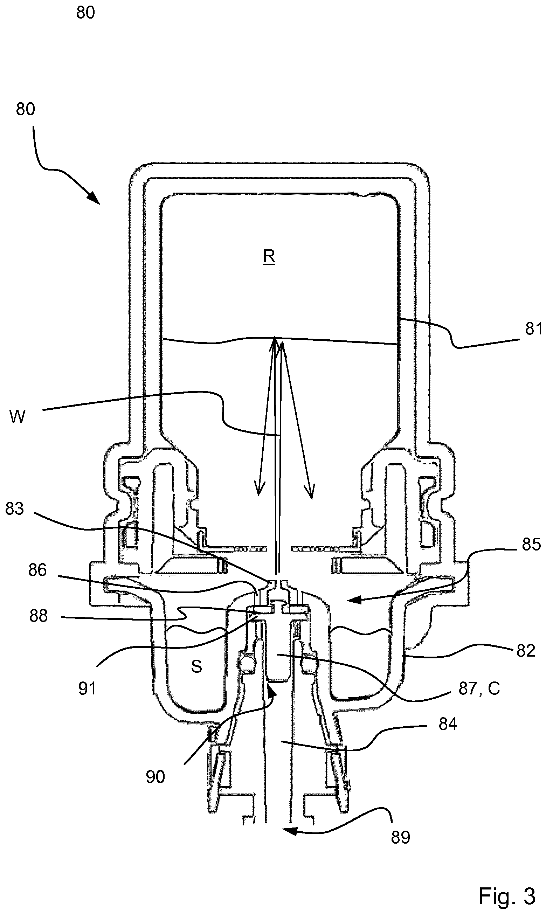

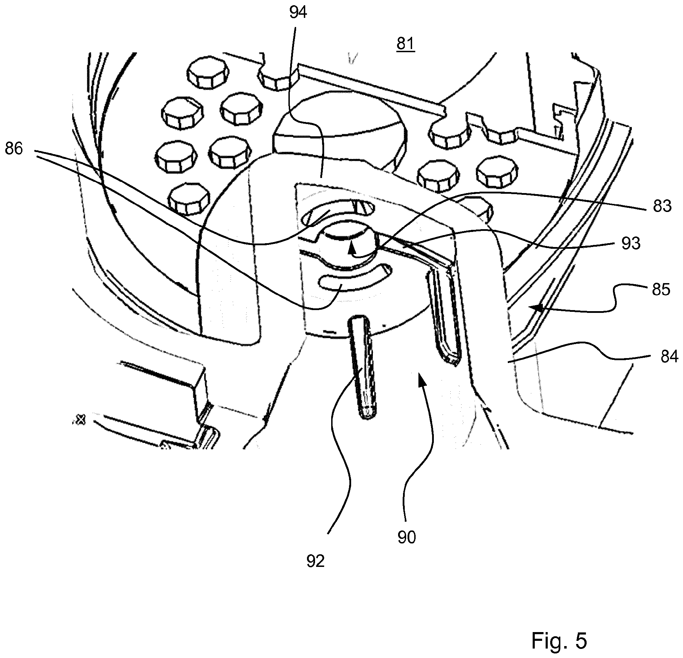

Fig. 3 zeigt schematisch die Reinigungsvorrichtung 80, wie sie mit hoher oder maximaler Pumpenleistung Pmax betrieben wird. Das Wasser W oder die Lösung S wird dabei mit einem hohen Fluiddruck, bevorzugt im Bereich von1 bis 5 Bar, in das Ventilrohr 84 eingelassen, wobei es durch die Düse 83 nach oben gegen das feste Reinigungsmittel R gespritzt wird. Dabei wird Schicht für Schicht Reiniger R abgetragen solange Wasser W oder Fluid S gegen die Oberfläche des Vorrats R spritzt. Der Reiniger R gelangt dann gemeinsam mit dem Wasser W in die Mischkammer 82. Das "Anspritzen" des Reinigervorrats R wird so lange durchgeführt, bis die Reinigerlösung S die vorgegebene Reinigerkonzentration aufweist. Um komplizierte Messsensorik zu vermeiden, erfolgt dies aufgrund einer vorgegeben Zeit, in dem Beispiel im Bereich von 4 bis 20 Sekunden, vorzugsweise 8 Sekunden. Im Ventilrohr 84 befindet sich ein Ventilkörper 87, der beweglich in Erstreckungsrichtung des Ventilrohres 84 geführt ist. Zwischen Körper 87 und der Innenwand des Ventilrohres 84 ist ein Spalt 90 und/oder Kanal 93 eingelassen, damit das Wasser W dort vorbei vom unteren Einlass 89 zur Düse 83 gelangen kann. Aufgrund des am Ventilkörper 87 entstehenden Staudrucks wird dieser 87 in Richtung der Öffnungen 86 gedrückt und dichtet mittels des Kragenrandes 91 und der daran angebrachten Dichtung 88 ab. Fig. 5 zeigt das düsenseitige Ende 94 des Ventilrohres 84 in einer geschnittenen Innenansicht. Zu erkennen sind dabei in Längsrichtung ausgerichtete Stege 92, die den Ventilkörper 87 von der Innenwand beabstandet führen, damit zwischen Innenwand und Ventilkörper 87 der Spalt 90 bereitzgestellt wird. Am düsenseitigen Ende 94 des Ventilrohres ist zumindest ein Kanal 93 eingeformt oder eingelassen, der die Fluidverbindung vom Spalt 90 zur Düse 83 sicherstellt, wenn der Ventilkörper 87, bevorzugt mit seinem Kragen 91 und der daran angebrachten Dichtung 88, an dem Ende 94 anliegt. Die Düse 83 besitzt einen an der Einlassseite größeren Querschnitt, als am Düsenausgang, wobei der Kanal 93 tangential an den kreisförmigen Einlass angebunden ist. Bevorzugt besitzt das Ventilrohr 84 am düesenseitigen Ende 94 zwei gegenüberliegend angeordnete Kanäle 93, die beide tangential an den Düseneinlass angebunden sind. Diese tangentiale Anbindung bewirkt beim Einströmen einen Wirbel innerhalb der Düse, wodurch ein gewirbelter, stark fokussierter Wasserstrahl W entsteht, der ein zuverlässiges und gleichmäßiges Auflösens des Pflegemittels R im darüberliegenden Vorratsbehälter 81 sicherstellt.

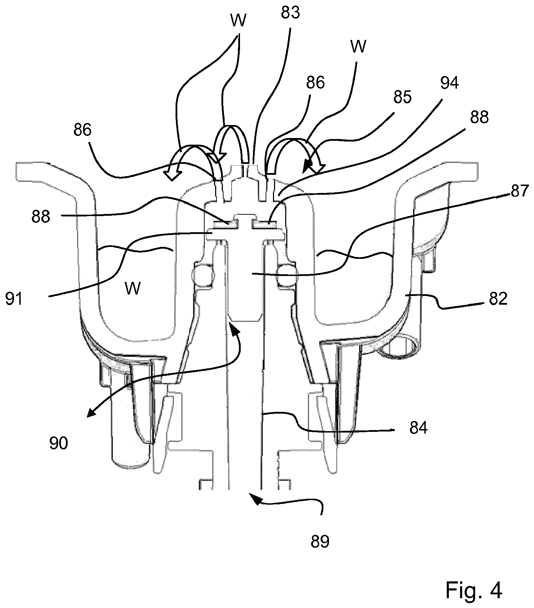

Fig. 4 zeigt die Situation des Ventils 84, 87, in der nicht das Pflegemittel R aus dem Behälter 81 herausgelöst werden soll. Um die den Bereich um die Düse 83 von Reinigerresten zu befreien oder generell Wasser in den Mischbehälter 82 einzulassen, ist es vorgesehen, dass vor dem Ansprühen und/oder nach Abschluss des Ansprühens oder nach der Durchführung des Reinigungszyklus durch die Düse 83 und die weiteren Auslässe 86 Wasser W mit vermindertem Druck durchgepumpt wird (Fig. 4). Hierbei wird die Pumpe P bzw. der Pumpenmotor M mit verminderter Leistung betrieben, vorzugsweise im Bereich von 0,2 bis 0,5 - fache der maximalen Pumpenleistung Pmax. Als maximale Pumpenleistung ist dabei eine Pumpenleistung Pmax mit einem Wert im Bereich zwischen 300 ml/min bis 800 ml/min, vorzugsweise im Bereich von 500 ml/min bis 700 ml/min vorgesehen. Der verminderte Druck im Ventilrohr 84 bewirkt, dass ein geringer Staudruck gegen die Unterseite des Ventilkörpers 87 wirkt, wodurch dieser aufgrund der Schwerkraft oder einer anderen Rückstellkraft sich von den Öffnungen 86 entfernt. Dadurch wird Wasser W zwar durch die Düse 83 hindurchgepresst, jedoch zusätzlich gelangt Wasser W durch die zusätzlichen Öffnungen 86. Die aus den Öffnungen 86 und der Düse 83 Wasserstrahlen W erreichen dabei aufgrund der Pumpenleistung und der darauf abgestimmten Querschnitte der Öffnungen 86 und der Düse 82 nicht die untere Fläche des Reinigerblocks R im Vorratsbehälter 81. Dies ist auch während des Spülvorgangs notwendig, da in dieser Phase Reinigerreste an der Oberseite des Sprühvorrichtung 85, bevorzugt im Bereich der Düse 83 und der Öffnungen 86, beseitigt werden, wobei kein weiteres Reinigungsmittel R in den Bereich der Düse 83 und der Öffnungen 86 gelangen darf.

## Patentansprüche

1. Getränkeautomat (1) zur Zubereitung von Aufgussgetränken, mit einem Strömungsleitungssystem (2) mit einer Wasserzuführung, einer Ventilanordnung (V1, V2, V3, V4) und einer Reinigungsvorrichtung (80) zur Durchführung eines Reinigungs- und/oder Pflegevorgangs, umfassend eine Vorratskartusche (81) zur Bevorratung von Reinigungsmittel (R), und eine elektrisch angetriebene Pumpe (8, M) zur Zuführung des Wassers und Reinigungsmittel (R) oder einer Reinigungslösung (S) von der Reinigungsvorrichtung (80) in das Strömungsleitungssystem (2), ferner umfassend eine Steuereinrichtung (18) zur Aktivierung und Deaktivierung der Ventilanordnung (V1, V2, V3, V4) und der Pumpe (8, M) zur Durchführung der Getränkezubereitung und des Reinigungs- oder Pflegevorgangs,
wobei die Reinigungsvorrichtung (80) eine durch die Pumpe (8, M) betriebene Sprühvorrichtung (85) zum Ansprühen mit Wasser und partiellem Auflösen von in dem Vorratsbehälter (81) vorhandenen, in fester oder pastöser Form angeordnetem Pflegemittel bzw. Reinigungsmittel (R) aufweist, und
die Reinigungsvorrichtung (80) ferner einen Mischbehälter (82) umfasst, in den das durch Ansprühen aufgelöste Pflegemittel (R) eintritt, wobei das Strömungsleitungssystem (2) ferner eine mit der Steuereinrichtung (18) in Verbindung stehende Ventilanordnung (V1, V2, V3, V4) umfasst, die dazu ausgebildet ist, das als Reinigerlösung (S) aufgelöste Pflegemittel (R) in das Strömungsleitungssystem (2) einzuleiten,
**dadurch gekennzeichnet,**
**dass** die Sprühvorrichtung (85) eine Sprühdüse (83) zur Bereitstellung eines etwa senkrecht nach oben gerichteten Sprühstrahls in den Vorratsbehälter (81) hinein und zumindest einen weiteren Auslass (86) zum Auslassen des Wassers (W) in den Mischbehälter (82) umfasst.

2. Getränkeautomat nach Anspruch 1,
**dadurch gekennzeichnet,**
**dass** die Sprühvorrichtung (85) ein Ventil (84, 87) mit zum Verschließen und zum Öffnen des weiteren Auslasses (86) umfasst.

3. Getränkeautomat nach Anspruch 2,
**dadurch gekennzeichnet,**
**dass** das Ventil (84, 87) ein Ventilrohr (84) mit einem darin beweglich geführten Verschlusskörper (87) umfasst, der dazu ausgebildet ist, anhand des durch die Strömung verursachten Staudruckes in die Verschlussposition (C) bewegbar ist.

4. Getränkeautomat nach Anspruch 3,
**dadurch gekennzeichnet,**
**dass** das Ventil (84, 87) eine Dichtung (88) umfasst, die mit dem Verschlusskörper (87) und dem weiteren Auslass (86) zusammenwirkt.

5. Getränkeautomat nach Anspruch 3 oder 4,
**dadurch gekennzeichnet,**
**dass** die Steuereinrichtung (18) ferner dazu eingerichtet und programmiert ist, die Pumpe (8, M) mit verschiedenen Pumpenleistungen (Pmax, P) zu aktivieren, um verschiedene Strömungen im Strömungsweg (84) des Ventils (84, 87) zu verursachen.

6. Getränkeautomat nach Anspruch 5,
**gekennzeichnet durch**
eine Motorsteuerung (19) zur Bereitstellung der Stromzuführung zur Pumpe (8, M), die mit der Steuereinrichtung (18) hinsichtlich Informationen (EM) der zugeführten elektrischen Leistung für die Pumpe (8, M) in Verbindung steht, wobei die Antriebssteuerung (19) dazu eingerichtet ist, der aufgrund dieser Informationen (EM) der Pumpe (8, M) die entsprechende elektrische Leitung (Pmax, P) zuzuführen.

7. Getränkeautomat nach einem der Ansprüche 5 bis 6,
**dadurch gekennzeichnet,**
**dass** die Steuereinrichtung (18) dazu eingerichtet ist, einen Reinigungsvorgang durchzuführen, bei dem die Antriebssteuerung (19) derart gesteuert wird, dass sich eine Zuführung der elektrischen Leistung (Pmax, P) oder Stromes zur Pumpe (8, M) gemäß einem vorgegebenen Profil hinsichtlich der Werte für den zugeführten elektrischen Leistung oder Strom einstellt.

8. Getränkeautomat nach einem der Ansprüche 5 bis 7,
**dadurch gekennzeichnet,**
**dass** die Antriebssteuerung (19) einen Frequenzumrichter umfasst, der dazu eingerichtet und ausgebildet ist, den der Pumpe (8, M) zugeführten Strom hinsichtlich der Frequenz und der bereitgestellten Leistung derart einzustellen, dass sich verschiedene, vorgegebene Pumpenleistungen (Pmax, P) ergeben oder einstellen.

9. Getränkeautomat nach einem der Ansprüche 5 bis 7,
**dadurch gekennzeichnet,**
**dass** die Antriebssteuerung (19) dazu eingerichtet ist, der Pumpe (8, M) eine puls-weiten-modulierten Strom zuzuführen, sodass sich verschiedene, vorgegebene Pumpenleistungen (Pmax, P) einstellen.

10. Verfahren zum Betreiben eines Getränkeautomaten (1) mit einem Strömungsleitungssystem (2) und einer Reinigungsvorrichtung (80), gemäß einem der Ansprüche 1 bis 8,
umfassend die Schritte
- Füllen des Mischbehälters (82) mit einer vorgegebenen Menge Wasser (W);
- Ansprühen des bevorrateten Reinigers (R);
- Überführen des Reinigerfluids (S) in das Strömungsleitungssystem bzw. zumindest bereichsweise in das Strömungsleitungssystem (2):
**dadurch gekennzeichnet,**
**dass** im Schritt - Ansprühen der bevorrateten Reinigers (R) - die Pumpe mit einer Leistung betrieben wird, die niedriger ist, als die maximale Leistung und
**dass** in den Schritten - Füllen des Mischbehälters (82) - und/oder einem weiteren Schritt Reinigen der Düse (83) - mit einer Leistung (P), die niedriger ist, als die maximale Leistung (Pmax).

11. Verfahren zum Betreiben eines Getränkeautomaten (1) nach Anspruch 10,
**dadurch gekennzeichnet,**
**dass** die maximale Pumpenleistung (Pmax) oder Durchflussleistung einen Wert im Bereich von 300 ml/min bis 800 ml/min, bevorzugt im Bereich von 400 ml/min bis 700 ml/min aufweist,

12. Verfahren zum Betreiben eines Getränkeautomaten (1) nach Anspruch 11,
**dadurch gekennzeichnet,**
**dass** die niedrigere Pumpenleistung (P) für den Schritt - Füllen des Mischbehälters - zumindest nahezu das 0,1-fache bis 0,2-fache der maximalen Pumpenleistung (Pmax) beträgt und/oder die niedrigere Pumpenleistung (P) für den Schritt - Ansprühen des bevorrateten Reinigers (R) - zumindest nahezu das 0,25 bis 0,4-fache der maximalen Pumpenleistung (Pmax) beträgt und/oder die niedrigere Pumpenleistung (P) für den Schritt - Reinigung oder Spülen der Düse - zumindest nahezu das 0,1 - fache bis 0,2 - fache der maximalen Pumpenleistung (Pmax) beträgt.

13. Getränkeautomat nach einem der Ansprüche 1 bis 9,
**dadurch gekennzeichnet,**
**dass** die Steuereinrichtung (18, uC) dazu eingerichtet ist, einen Reinigungsvorgang gemäß dem Verfahren nach einem der Ansprüche 10 bis 12 durchzuführen, bei dem die Antriebssteuerung (19) derart gesteuert wird, dass sich eine Zuführung der elektrischen Leistung (Pmax, P) oder Stromes zur Pumpe (P, M) gemäß einem vorgegebenen Profil hinsichtlich der Werte für den zugeführten elektrischen Leistung oder Strom einstellt.

## Claims

1. Beverage machine (1) for preparing infusion beverages, having a flow line system (2) that has a water supply, a valve arrangement (V1, V2, V3, V4) and a cleaning device (80) for carrying out a cleaning and/or care process, comprising a storage cartridge (81) for storing cleaning agent (R), and an electrically driven pump (8, M) for supplying the water and cleaning agent (R) or a cleaning solution (S) from the cleaning device (80) into the flow line system (2), further comprising a controller (18) for activating and deactivating the valve arrangement (V1, V2, V3, V4) and the pump (8, M) for carrying out the beverage preparation and the cleaning or care process, the cleaning device (80) having a spray device (85) that is operated by the pump (8, M) for spraying with water and partially dissolving care agent or cleaning agent (R) which is present in the storage container (81) and arranged in solid or pasty form, and the cleaning device (80) further comprising a mixing container (82) into which the care agent (R), which has been dissolved by being sprayed, enters, the flow line system (2) also comprising a valve arrangement (V1, V2, V3, V4) which is connected to the controller (18) and is designed to introduce the care agent (R) which has been dissolved as a cleaning solution (S) into the flow line system (2), **characterised in that** the spray device (85) has a spray nozzle (83) for providing a spray jet directed approximately vertically upwards into the storage container (81) and at least one further outlet (86) for discharging the water (W) into the mixing container (82).

2. Beverage machine according to claim 1, **characterised in that** the spray device (85) comprises a valve (84, 87) for closing and opening the further outlet (86).

3. Beverage machine according to claim 2, **characterised in that** the valve (84, 87) comprises a valve tube (84) that has a closure body (87) movably guided therein, which closure body is designed to be movable into the closure position (C) by means of the dynamic pressure caused by the flow.

4. Beverage machine according to claim 3, **characterised in that** the valve (84, 87) comprises a seal (88) which cooperates with the closure body (87) and the further outlet (86).

5. Beverage machine according to either claim 3 or claim 4, **characterised in that** the controller (18) is also configured and programmed to activate the pump (8, M) at different pump outputs (Pmax, P) in order to produce different flows in the flow path (84) of the valve (84, 87).

6. Beverage machine according to claim 5, **characterised by** a motor controller (19) for providing the current supply to the pump (8, M), which motor controller is in communication with the controller (18) with respect to information (EM) regarding the supplied electric power for the pump (8, M), the drive controller (19) being configured to supply the corresponding electric power (Pmax, P) to the pump (8, M) on the basis of this information (EM).

7. Beverage machine according to either claim 5 or claim 6, **characterised in that** the controller (18) is configured to carry out a cleaning process, during which the drive controller (19) is controlled such that a supply of electric power (Pmax, P) or current to the pump (8, M) is set according to a predetermined profile with respect to the values of the supplied electric power or current.

8. Beverage machine according to any of claims 5 to 7, **characterised in that** the drive controller (19) comprises a frequency converter which is configured and designed to set the current supplied to the pump (8, M) in terms of frequency and the power provided such that different predetermined pump powers (Pmax, P) are produced or set.

9. Beverage machine according to any of claims 5 to 7, **characterised in that** the drive controller (19) is configured to supply the pump (8, M) with a pulse width modulated current, such that different predetermined pump powers (Pmax, P) are set.

10. Method for operating a beverage machine (1) comprising a flow line system (2) and a cleaning device (80), according to any of claims 1 to 8, the method comprising the following steps:
- filling the mixing container (82) with a predetermined amount of water (W);
- spraying the stored cleaner (R);
- transferring the cleaning fluid (S) into the flow line system or at least into regions of the flow line system (2);
**characterised in that**, in the step of spraying the stored cleaner (R), the pump is operated at a power that is lower than the maximum power, and **in that**, in the steps of filling the mixing container (82) and/or a further step of cleaning the nozzle (83), said pump is operated at a power (P) that is lower than the maximum power (Pmax).

11. Method for operating a beverage machine (1) according to claim 10, **characterised in that** the maximum pump power (Pmax) or flow rate has a value in the range of from 300 ml/min to 800 ml/min, preferably in the range of from 400 ml/min to 700 ml/min.

12. Method for operating a beverage machine (1) according to claim 11, **characterised in that** the lower pump power (P) for the step of filling the mixing container is at least nearly 0.1 to 0.2 times the maximum pump power (Pmax) and/or the lower pump power (P) for the step of spraying the stored cleaner (R) is at least nearly 0.25 to 0.4 times the maximum pump power (Pmax) and/or the lower pump power (P) for the step of cleaning or rinsing the nozzle is at least nearly 0.1 to 0.2 times the maximum pump power (Pmax).

13. Beverage machine according to any of claims 1 to 9, **characterised in that** the controller (18, uC) is configured to carry out a cleaning process using the method according to any of claims 10 to 12, during which the drive controller (19) is controlled such that a supply of electric power (Pmax, P) or current to the pump (P, M) is set according to a predetermined profile in terms of the values of the supplied electric power or current.

## Revendications

1. Distributeur automatique de boissons (1) destiné à préparer des boissons infusées, comportant un système de conduite d'écoulement (2) comportant une alimentation en eau, un agencement de soupapes (V1, V2, V3, V4) et un dispositif de nettoyage (80) destiné à effectuer un processus de nettoyage et/ou d'entretien, comprenant une cartouche de stockage (81) destinée à stocker un agent de nettoyage (R), et une pompe à entraînement électrique (8, M) destinée à amener l'eau et l'agent de nettoyage (R) ou une solution de nettoyage (S) du dispositif de nettoyage (80) au système de conduite d'écoulement (2), comprenant en outre un organe de commande (18) destiné à activer et désactiver l'agencement de soupapes (V1, V2, V3, V4) et la pompe (8, M) afin d'effectuer la préparation de boissons et le processus de nettoyage ou d'entretien,
le dispositif de nettoyage (80) présentant un dispositif de pulvérisation (85) actionné par la pompe (8, M) et destiné à la pulvérisation d'eau et à la dissolution partielle des agents d'entretien ou de nettoyage (R) présents dans le récipient de stockage (81) sous forme solide ou pâteuse, et
le dispositif de nettoyage (80) comprenant en outre un récipient de mélange (82) dans lequel entre l'agent d'entretien (R) dissous par pulvérisation, le système de conduite d'écoulement (2) comprenant en outre un agencement de soupapes (V1, V2, V3, V4) relié à l'organe de commande (18) et conçu pour introduire l'agent d'entretien (R) dissous en tant que solution de nettoyage (S) dans le système de conduite d'écoulement (2),
**caractérisé**
**en ce que** le dispositif de pulvérisation (85) comprend une buse de pulvérisation (83) destinée à fournir un jet de pulvérisation, dirigé approximativement verticalement vers le haut, dans le récipient de stockage (81) et au moins une autre évacuation (86) destinée à évacuer l'eau (W) dans le récipient de mélange (82).

2. Distributeur automatique de boissons selon la revendication 1,
**caractérisé**
**en ce que** le dispositif de pulvérisation (85) comprend une soupape (84, 87) destinée à fermer et à ouvrir l'autre évacuation (86).

3. Distributeur automatique de boissons selon la revendication 2,
**caractérisé**
**en ce que** la soupape (84, 87) comprend un tube de soupape (84) comportant un corps de fermeture (87) guidé de manière mobile dans ce dernier, le corps de fermeture étant conçu pour se déplacer dans la position de fermeture (C) à l'aide de la pression dynamique générée par l'écoulement.

4. Distributeur automatique de boissons selon la revendication 3,
**caractérisé**
**en ce que** la soupape (84, 87) comprend un joint d'étanchéité (88) qui coopère avec le corps de fermeture (87) et l'autre évacuation (86).

5. Distributeur automatique de boissons selon la revendication 3 ou 4,
**caractérisé**
**en ce que** l'organe de commande (18) est en outre configuré et programmé pour activer la pompe (8, M) avec différentes puissances de pompe (Pmax, P) afin de générer différents écoulements dans le trajet d'écoulement (84) de la soupape (84, 87).

6. Distributeur automatique de boissons selon la revendication 5,
**caractérisé par**
une commande de moteur (19) destinée à fournir l'alimentation en courant à la pompe (8, M), laquelle commande de moteur est reliée à l'organe de commande (18) en ce qui concerne des informations (EM) relatives à la puissance électrique alimentée pour la pompe (8, M), la commande d'entraînement (19) étant configurée pour alimenter la pompe (8, M) en puissance électrique correspondante (Pmax, P) sur la base desdites informations (EM).

7. Distributeur automatique de boissons selon l'une des revendications 5 à 6, **caractérisé**
**en ce que** l'organe de commande (18) est configuré pour effectuer un processus de nettoyage dans lequel la commande d'entraînement (19) est commandée de telle sorte qu'une alimentation de la pompe (8, M) en puissance électrique (Pmax, P) ou en courant est réglée selon un profil prédéterminé en ce qui concerne les valeurs pour la puissance électrique ou le courant alimenté(e).

8. Distributeur automatique de boissons selon l'une des revendications 5 à 7, **caractérisé**
**en ce que** la commande d'entraînement (19) comprend un convertisseur de fréquence configuré et conçu pour régler le courant alimenté vers la pompe (8, M) en ce qui concerne la fréquence et la puissance fournie, de manière à obtenir ou à régler différentes puissances de pompage (Pmax, P) prédéterminées.

9. Distributeur automatique de boissons selon l'une des revendications 5 à 7, **caractérisé**
**en ce que** la commande d'entraînement (19) est configurée pour alimenter la pompe (8, M) en courant modulé en largeur d'impulsion, de telle sorte que différentes puissances de pompage (Pmax, P) prédéterminées sont réglées.

10. Procédé de fonctionnement d'un distributeur automatique de boissons (1) comportant un système de conduite d'écoulement (2) et un dispositif de nettoyage (80) selon l'une des revendications 1 à 8,
comprenant les étapes
- de remplissage du récipient de mélange (82) avec une quantité d'eau prédéterminée (W) ;
- de pulvérisation du nettoyant stocké (R) ;
- de transfert du fluide de nettoyage (S) dans le système de conduite d'écoulement ou au moins partiellement dans le système de conduite d'écoulement (2) ;
**caractérisé**
**en ce que**, à l'étape de - pulvérisation du nettoyant stocké (R) - la pompe fonctionne avec une puissance inférieure à la puissance maximale et en ce que, aux étapes de - remplissage du récipient de mélange (82) - et/ou à une étape supplémentaire de nettoyage de la buse (83) - la pompe fonctionne avec une puissance (P) inférieure à la puissance maximale (Pmax).

11. Procédé de fonctionnement d'un distributeur automatique de boissons (1) selon la revendication 10,
**caractérisé**
**en ce que** la puissance de pompage maximale (Pmax) ou la puissance de débit présente une valeur située dans la plage entre 300 et 800 ml/min, de préférence dans la plage entre 400 et 700 ml/min.

12. Procédé de fonctionnement d'un distributeur automatique de boissons (1) selon la revendication 11,
**caractérisé**
**en ce que** la puissance de pompage (P) inférieure pour l'étape de - remplissage du récipient de mélange - représente au moins approximativement 0,1 à 0,2 fois la puissance de pompage maximale (Pmax) et/ou en ce que la puissance de pompage (P) inférieure pour l'étape de - pulvérisation du nettoyant stocké (R) - représente au moins approximativement 0,25 à 0,4 fois la puissance de pompage maximale (Pmax) et/ou en ce que la puissance de pompage (P) inférieure pour l'étape de - nettoyage ou de rinçage de la buse - représente au moins approximativement 0,1 à 0,2 fois la puissance de pompage maximale (Pmax).

13. Distributeur automatique de boissons selon l'une des revendications 1 à 9, **caractérisé**
**en ce que** l'organe de commande (18, uC) est configuré pour effectuer un processus de nettoyage selon le procédé selon l'une des revendications 10 à 12, la commande d'entraînement (19) étant commandée de telle sorte qu'une alimentation de la pompe (P, M) en puissance électrique (Pmax, P) ou en courant est réglée selon un profil prédéterminé en ce qui concerne les valeurs pour la puissance électrique ou le courant alimenté(e).
